# EUROPEAN PATENT APPLICATION

(11) **EP 4 546 545 A2**
(43) Date of publication of application: **30.04.2025**
(21) Application number: 24824727.2
(22) Date of filing: 26.11.2024
(51) Int. Cl.: H01M 50/449

(54) **BATTERY SEPARATOR AND MANUFACTURING METHOD THEREFOR**

(30) Priority: 23.10.2024 CN 202411480801
(71) Applicant: Shanghai Energy New Materials Technology Co., Ltd., Shanghai 201399 (CN)
(72) Inventor: XUE, Congcong, Shanghai 201399 (CN); CHEN, Jie, Shanghai 201399 (CN); LIAO, Chenbo, Shanghai 201399 (CN); CHEN, Yongle, Shanghai 201399 (CN); SUN, Minqiang, Shanghai 201399 (CN); LIU, Haitao, Shanghai 201399 (CN); GAO, Yingran, Shanghai 201399 (CN); KONG, Yang, Shanghai 201399 (CN); QIAN, Yu, Shanghai 201399 (CN)
(74) Representative: Ipside
(86) International application number: PCT/CN2024/134428
(87) International publication number: WO 2025/056097

(57) **Abstract**

Provided in the present disclosure is a battery separator, including: at least one base film; at least one inorganic layer located on the base film; and a plurality of polymer particles. The plurality of polymer particles are located on the inorganic layer. The density of the polymer particles is less than the density of the inorganic layer. In the present disclosure, the prepared polymer particles having a multilayer structure are blended with barium titanate. A blended slurry is coated onto the base film and then placed in an oven for drying. During a drying process, a density difference exists between barium titanate and the polymer particles, so that barium titanate having a relatively large density sinks and the polymer particles float up. Therefore, the manufactured battery separator has excellent heat resistance and high adhesive performance.

## Description

### TECHNICAL FIELD

The present disclosure relates to the field of lithium-ion battery separators, and particularly to a battery separator and a preparation method thereof.

### BACKGROUND

Excessive consumption of petrochemical materials causes serious environmental pollution problems. In view of the above problems, it becomes particularly important to replace petrochemical materials with new energy materials. Lithium-ion batteries, due to their advantages such as high energy density, high safety and stability and long cycle life, have been widely applied to consumer electronics, power products, and energy storage products.

A battery separator is an important element in a lithium battery. Currently, a battery separator with a microporous structure is generally prepared by extruding, extracting, and stretching a polyolefin material. To improve heat resistance of the separator, a polyolefin-based film is generally coated with an inorganic material (such as ceramics, cellulose, aramid, etc.) that has high heat resistance. However, inorganic particles are poor in dispersibility and easy to fall off, have a serious powder shedding phenomenon, and need to be used in combination with other components, thereby greatly increasing production costs. In addition, in order to meet the requirements of a current battery preparation process, it is necessary to ensure strong adhesion between the separator and electrode sheets to prevent tab misalignment. Currently, for a solution for producing a separator with high heat resistance and high adhesion, an adhesive layer (PVDF) is generally coated on an inorganic particle powder body. However, PVDF has a high temperature at a softening point. At a low hot-pressing temperature, the softening point of PVDF is not easily triggered, resulting in insufficient adhesion between the separator and positive and negative electrode sheets.

A battery separator proposed in the present disclosure can effectively solve the following problems: an existing battery separator has poor heat resistance; hot-pressing process windows for the separator and the electrode sheet are narrow; at present, secondary coating is necessary during the preparation of the separator with high heat resistance and high adhesion; energy consumption is excessive; a formulation of a coating material is complex, fluctuations of physical property parameters of a coating during a coating process are large due to poor stability of a slurry, etc. Compared with the existing separator, the battery separator has better performance.

### SUMMARY

An object of the present disclosure is to provide a battery separator, including: at least one base film; at least one inorganic layer located on the base film; and a plurality of polymer particles, where the plurality of polymer particles are located on the inorganic layer, and the density of the polymer particles is less than the density of the inorganic layer.

Preferably, the inorganic layer includes one or more of barium titanate, alumina, silica, and titanium dioxide.

Preferably, the polymer particles include one or more of a polyacrylonitrile layer, a polystyrene layer, a polyvinylidene fluoride layer, a polymethyl methacrylate layer, and a polyacrylamide layer.

Preferably, a vegetable oil layer is provided on the outer sides of the polymer particles.

Preferably, the vegetable oil layer includes one or more of sunflower seed oil, Chinese tallow seed oil, olive oil, rubber seed oil, castor oil, tung oil, and palm oil.

Preferably, the polymer particles further include a plurality of cellulose nanofibers. The plurality of cellulose nanofibers are located on an outer side of the vegetable oil layer. A portion of the plurality of cellulose nanofibers are connected to the inorganic layer.

Preferably, the cellulose nanofibers include one or more of degreased cotton, paper pulp, wood pulp, and hemp.

Another objective of the present disclosure is to provide a preparation method of a battery separator, including the following steps: mixing vegetable oil, N-methylethanolamine and a catalyst, heating and sealing to obtain a vegetable-oil-based precursor; mixing the vegetable-oil-based precursor and anhydride, sealing and heating to obtain a vegetable-oil-based acrylate monomer; mixing the vegetable-oil-based acrylate monomer, perbenzoic acid and sodium carbonate, sealing and stirring at room temperature to obtain a vegetable-oil-based acrylate epoxy monomer; uniformly mixing the vegetable-oil-based acrylate epoxy monomer, a styrene monomer, a methyl methacrylate monomer, a vinylidene fluoride monomer and an acrylonitrile monomer, subsequently adding dropwise into a cellulose nanofiber suspension, mixing and stirring to obtain an oil-water mixture, and treating the oil-water mixture by an ultrasonic disruptor to obtain a Pickering emulsion; adding the Pickering emulsion dropwise into a mixed solvent of ethanol and water, adding a water-soluble initiator, after a reaction is finished, cooling to room temperature, and filtering with a filter screen to obtain a polymer composite emulsion; mixing the polymer composite emulsion with an inorganic substance to obtain a coating slurry; and coating the coating slurry onto the base film, and drying to obtain the battery separator.

Preferably, the cellulose nanofiber suspension includes one or more of degreased cotton, paper pulp, wood pulp, and hemp.

Preferably, the inorganic substance includes one or more of barium titanate, alumina, silica, and titanium dioxide.

Preferably, a mixture of the vegetable oil, N-methylethanolamine and the catalyst has a heating temperature of 50°C to 80°C, and a reaction time of 8 h. A mixture of the vegetable-oil-based precursor and anhydride has a heating temperature between 60°C and 80°C and a reaction time of 8 h to 12 h. A stirring time of A mixture of the vegetable-oil-based acrylate monomer, perbenzoic acid and sodium carbonate is 12 h.

Preferably, the ultrasonic disruptor has processing power between 600 watts and 800 watts, and processing time between 10 min and 15 min. After dropwise adding the Pickering emulsion to the mixed solvent and subsequently adding the water-soluble initiator, polymerization is carried out at 60°C to 80°C for 2h to 4 h.

Preferably, the oil-water mixture has an oil-to-water ratio of 1:4-1:8.

Preferably, the water-soluble initiator includes one or more of ammonium persulfate, potassium persulfate, and a peroxide.

Preferably, the coating slurry is coated onto the base film and then dried at 60°C to 90°C for 0.5 min to 3 min.

In this disclosure, the method includes the following steps: preparing the vegetable-oil-based acrylate monomer by synthesis using the vegetable oil as a raw material, adding a certain proportion of the methyl methacrylate monomer, the vinylidene fluoride monomer, the acrylonitrile monomer, an acrylamide monomer and the styrene monomer, and dispersing and polymerizing using the cellulose nanofibers as a stabilizer, a mixture of ethanol and water as a dispersing agent and azobisisobutyronitrile as an initiator. The preparation method is more environmentally friendly than an existing preparation method. Subsequently, the prepared polymer particles with a multilayer structure are blended with barium titanate. A blended slurry is coated onto the base film and then placed in an oven for drying. During a drying process, a density difference exists between barium titanate and the polymer particles, so that barium titanate with a relatively large density sinks and the polymer particles float up. Therefore, the prepared battery separator has excellent heat resistance and high adhesive performance. Furthermore, only one coating process is required in the preparation process. Compared with an existing commonly used secondary coating manner, both energy consumption and costs can be greatly reduced. In addition, the battery separator provided in the present disclosure is adaptable to hot-pressing processes of different battery manufacturers, and maintains adhesion to an electrode sheet within a hot-pressing temperature range of 25°C to 150°C.

### BRIEF DESCRIPTION OF THE DRAWINGS

FIG. 1 is a schematic diagram of a battery separator according to an embodiment of the present disclosure.
FIG. 2 is a schematic diagram of polymer particles according to an embodiment of the present disclosure.
FIG. 3 is a flow diagram of a preparation method of a battery separator according to an embodiment of the present disclosure.

### DETAILED DESCRIPTION OF EMBODIMENTS

Specific embodiments of the present disclosure will be described in detail in conjunction with the accompanying drawings. It should be understood that the specific embodiments described herein are only intended to illustrate and explain the present disclosure, but not to limit the present disclosure.

The endpoints of ranges and any values disclosed herein are not limited to precise ranges or values, which should be understood to include values approximating these ranges or values. For ranges of the values, the endpoints of each range, the endpoints of each range and the individual point values, and the individual point values can be combined with each other to yield one or more new value ranges that should be considered as specifically disclosed herein.

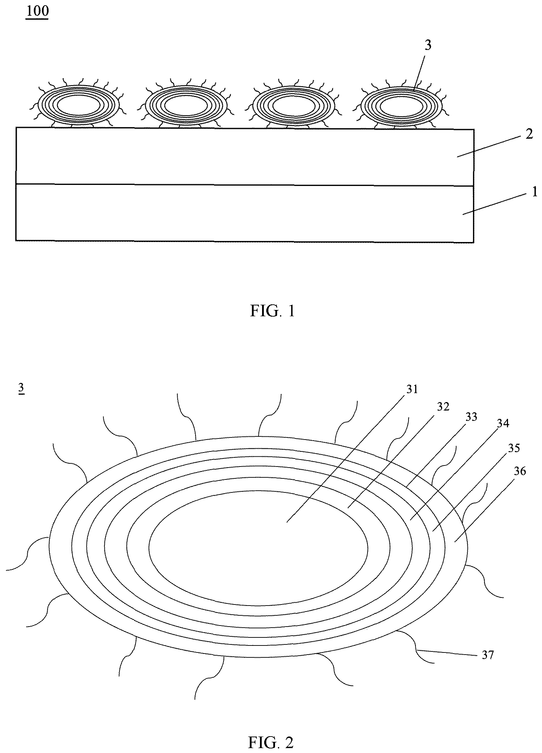

Referring to FIG. 1, FIG. 1 is a schematic diagram of a battery separator according to an embodiment of the present disclosure. The battery separator 100 includes at least one base film 1, at least one inorganic layer 2 and a plurality of polymer particles 3. In an embodiment of the present disclosure, the polymer particles 3 are spherical. The inorganic layer 2 is located between the base film 1 and the plurality of polymer particles 3. The polymer particles 3 have a multilayer structure. The density of the polymer particles 3 is less than the density of the inorganic layer 2. Preferably, the base film 1 may be made of polypropylene, and the inorganic layer 2 may include one or more of barium titanate, alumina, silica, and titanium dioxide.

Referring to FIG. 2, FIG. 2 is a schematic diagram of the polymer particles according to an embodiment of the present disclosure. The polymer particles 3 are polymer. The polymer particles 3 may include one or more of a polyacrylonitrile layer 31, a polystyrene layer 32, a polyvinylidene fluoride layer 33, a polymethyl methacrylate layer 34, and a polyacrylamide layer 35. In an embodiment of the present disclosure, the polymer particles 3 include, from the inside to the outside, the polyacrylonitrile layer 31, the polystyrene layer 32, the polyvinylidene fluoride layer 33, the polymethyl methacrylate layer 34, the polyacrylamide layer 35, a vegetable oil layer 36, and a plurality of cellulose nanofibers 37. Preferably, the vegetable oil layer 36 may include one or more of sunflower seed oil, Chinese tallow seed oil, olive oil, rubber seed oil, castor oil, tung oil, and palm oil. The cellulose nanofibers may include one or more of degreased cotton, paper pulp, wood pulp, and hemp.

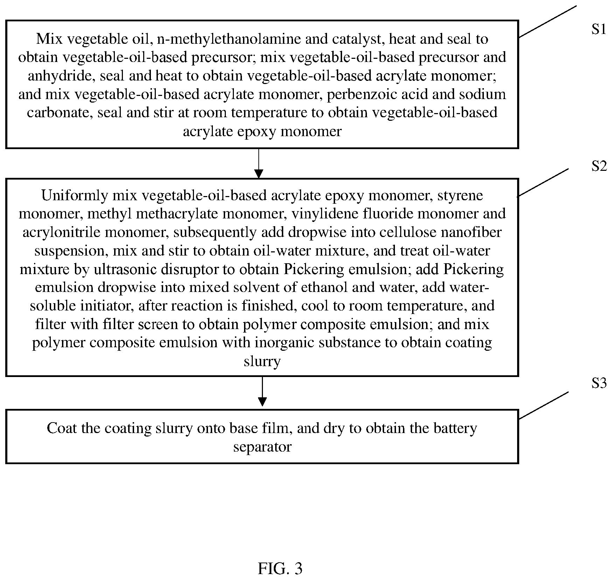

Referring to FIG. 3, FIG. 3 is a flow diagram of a preparation method of a battery separator according to an embodiment of the present disclosure. The preparation method will be described below in detail.

Step S1, preparation of a vegetable-oil-based acrylate epoxy monomer. Mixing 8-20 parts of vegetable oil, 1-4 parts of N-methylethanolamine, 0.1-1 part of catalyst, sealing and heating to 50°C-80°C, reacting for 8 hours, and then removing an unreacted material to obtain a vegetable-oil-based precursor. Mixing 8-20 parts of the vegetable-oil-based precursor and 2-15 parts of anhydride, sealing and heating to 60°C-80°C, reacting for 8-12 hours, and removing an unreacted material to obtain a vegetable-oil-based acrylate monomer. Mixing 8-20 parts of the vegetable-oil-based acrylate monomer, 2-5 parts of perbenzoic acid and 5-10 parts of sodium carbonate, sealing and stirring at room temperature for 12 h, and removing an unreacted material to obtain a vegetable-oil-based acrylate epoxy monomer.

Step S2, preparation of a polymer composite emulsion and a coating slurry. Mixing 8-20 parts of the vegetable-oil-based acrylate epoxy monomer, 1-8 parts of styrene monomer, 1-3 parts of methyl methacrylate, 2-5 parts of vinylidene fluoride monomer and 3-5 parts of acrylonitrile monomer, adding dropwise into 40-400 parts of cellulose nanofiber suspension, uniformly stirring to obtain an oil-water mixture, and treating the oil-water mixture by an ultrasonic disruptor of 600-800 watts for 10 min-15 min to obtain a Pickering emulsion. Adding 60-80 parts of the Pickering emulsion dropwise into a mixed solvent of ethanol and water, and adding 0.2-0.4 parts of water-soluble initiator. Preferably, the water-soluble initiator may include one or more of ammonium persulfate, potassium persulfate, and a peroxide. Then, polymerize a mixture in a thermostatic device at 60°C-80°C for 2h to 4 h. After the reaction is finished, cooling to room temperature, and filtering with a nylon filter screen of 100-300 meshes to obtain the polymer composite emulsion. Preferably, the oil-water mixture has an oil-to-water ratio of 1:4-1:8. Finally, blending 10-30 parts of the polymer composite emulsion with 70-90 parts of barium titanate to obtain the coating slurry.

In another embodiment of the present disclosure, a formulation ratio can be 0.1-2 parts of cellulose nanofibers, 3-7 parts of a vegetable oil-based polymer, 1-3 parts of polystyrene, 3-6 parts of polymethyl methacrylate, 1-5 parts of polyvinylidene fluoride, 1-3 parts of polyacrylonitrile, 1-4 parts of polyacrylamide, and 70-89.9 parts of barium titanate, with 100 parts in total. In another embodiment of the present disclosure, the solid content of the cellulose nanofibers is from 0.1 wt% to 1 wt%.

Step S3, preparation of a battery separator. Evenly coating 1-3 parts of the coating slurry onto the base film 1 by roller coating, drying in a blasting oven at 60°C to 90°C for 0.5 min to 3 min, and after drying, obtaining the battery separator with heat resistance and adhesion.

The preparation method of the battery separator of the present disclosure will be exemplarily described in the following embodiments.

### Embodiment 1:

A preparation method of a vegetable-oil-based acrylate epoxy monomer specifically includes the following steps:
(1) In parts by mass, taking 50 parts of palm oil, purging with nitrogen at 100°C for 30 min to heat the palm oil to 65°C, then adding 8 parts of amino alcohol and 1 part of sodium methoxide solution (5 mol/L), sealing and reacting at 65°C for 8 h, then pouring the mixture into 50 parts of dichloromethane (DCM) to dissolve, washing with saturated sodium chloride, and drying with anhydrous magnesium sulfate to obtain a vegetable oil-based precursor.
(2) Mixing 50 parts of vegetable-oil-based precursor, 15 parts of anhydride, and 0.4 parts of 4-dimethylaminopyridine, sealing and heating to 65°C, reacting for 8 h, then pouring a mixture into 50 parts of dichloromethane to dissolve, washing successively with saturated sodium bicarbonate and saturated sodium chloride, drying with anhydrous magnesium sulfate, and passing through an alkaline alumina column to obtain a vegetable-oil-based acrylate monomer.
(3) Adding dropwise 50 parts of the vegetable-oil-based acrylate monomer, 10 parts of sodium carbonate and 6 parts of hydrogen peroxide respectively into 50 parts of dichloromethane to dissolve, stirring at room temperature for 8 h, then washing successively with a saturated sodium thiosulfate solution, a saturated sodium bicarbonate solution and the saturated sodium chloride solution, drying with anhydrous magnesium sulfate, and then passing through the alkaline alumina column to obtain a vegetable-oil-based acrylate epoxy monomer.

### Embodiment 2:

A preparation method of a battery separator specifically includes the following steps:
(1) In parts by mass, mixing 5 parts of the vegetable-oil-based acrylate epoxy monomer prepared in Embodiment 1, 2 parts of styrene monomer, 4 parts of methyl methacrylate, 3 parts of vinylidene fluoride, 2 parts of acrylonitrile and 4 parts of acrylamide monomer, then adding dropwise into 80 parts of 0.2 wt% of the cellulose nanofiber suspension, uniformly mixing, and treating the mixture by a 600-watt ultrasonic disruptor for 10 min to obtain a Pickering emulsion 1. The stability, particle size, and viscosity parameters of the Pickering emulsion 1 are shown in Table 1.
(2) Placing 50 parts of the Pickering emulsion 1 in a 65°C thermostatic device, purging with nitrogen to remove oxygen for 30 min, then adding 0.2 parts of a water-soluble initiator potassium persulfate to react for 3 h, heating to 80°C, reacting for 30 min, then cooling to room temperature, and filtering with a 100-mesh nylon filter screen to obtain a polymer composite emulsion.
(3) Blending 10 parts of the polymer composite emulsion with 90 parts of barium titanate solution (solid content of 20 wt%) and mechanically stirring for 2 h to obtain a coating slurry. Evenly coating the coating slurry onto a polypropylene base film using a roller coater, and drying in a 60°C oven for 1 min to obtain the battery separator.

### Comparative Example 1:

A preparation method of a battery separator specifically includes the following steps:
(1) In parts by mass, mixing 5 parts of the vegetable-oil-based acrylate epoxy monomer prepared in Embodiment 1, 2 parts of styrene monomer, 4 parts of methyl methacrylate, 3 parts of vinylidene fluoride, 2 parts of acrylonitrile and 4 parts of acrylamide monomer, then adding dropwise into 80 parts of 0.5 wt% of the cellulose nanofiber suspension, fully and uniformly mixing, and treating the mixture by a 600-watt ultrasonic disruptor for 10 min to obtain a Pickering emulsion 2. The stability, particle size, and viscosity parameters of the Pickering emulsion 2 are shown in Table 1.
(2) Placing 50 parts of the Pickering emulsion 2 in a 65°C thermostatic device, purging with nitrogen to remove oxygen for 30 min, then adding 0.2 parts of a water-soluble initiator potassium persulfate to react for 3 h, heating to 80°C, reacting for 30 min, then cooling to room temperature, and filtering with a 100-mesh nylon filter screen to obtain a polymer composite emulsion.
(3) Blending 10 parts of the polymer composite emulsion with 90 parts of barium titanate solution (solid content of 20 wt%) and mechanically stirring for 2 h to obtain a coating slurry. Evenly coating the coating slurry onto a polypropylene base film using a roller coater, and drying in a 60°C oven for 1 min to obtain the battery separator.

### Comparative Example 2:

A preparation method of a battery separator specifically includes the following steps:
(1) In parts by mass, mixing 5 parts of the vegetable-oil-based acrylate epoxy monomer prepared in Embodiment 1, 2 parts of styrene monomer, 4 parts of methyl methacrylate, 3 parts of vinylidene fluoride, 2 parts of acrylonitrile and 4 parts of acrylamide monomer, then adding dropwise into 160 parts of 0.2 wt% of the cellulose nanofiber suspension, fully and uniformly mixing, and treating the mixture by the 600-watt ultrasonic disruptor for 10 min to obtain a Pickering emulsion 3. The stability, particle size, and viscosity parameters of the Pickering emulsion 3 are shown in Table 1.
(2) Placing 50 parts of the Pickering emulsion 3 in a 65°C thermostatic device, purging with nitrogen to remove oxygen for 30 min, then adding 0.2 parts of a water-soluble initiator potassium persulfate to react for 3 h, heating to 80°C, reacting for 30 min, then cooling to room temperature, and filtering with a 100-mesh nylon filter screen to obtain a polymer composite emulsion.
(3) Blending 10 parts of the polymer composite emulsion with 90 parts of barium titanate solution (solid content of 20 wt%) and mechanically stirring for 2 hours to obtain a coating slurry. Evenly coating the coating slurry onto a polypropylene base film using a roller coater, and drying in a 60°C oven for 1 min to obtain the battery separator.

### Comparative Example 3:

A preparation method of a battery separator specifically includes the following steps:
(1) In parts by mass, mixing 5 parts of the vegetable-oil-based acrylate epoxy monomer prepared in Embodiment 1, 2 parts of styrene monomer, 4 parts of methyl methacrylate, 3 parts of vinylidene fluoride, 2 parts of acrylonitrile and 4 parts of acrylamide monomer, then adding dropwise into 80 parts of 0.2 wt% of the cellulose nanofiber suspension, fully and uniformly mixing, and treating the mixture by a 600-watt ultrasonic disruptor for 10 min to obtain a Pickering emulsion 1.
(2) Placing 50 parts of the Pickering emulsion 1 in a 65°C thermostatic device, purging with nitrogen to remove oxygen for 30 min, then adding 0.2 parts of a water-soluble initiator potassium persulfate to react for 3 h, heating to 80°C, reacting for 30 min, then cooling to room temperature, and filtering with a 100-mesh nylon filter screen to obtain a polymer composite emulsion.
(3) Evenly coating 10 parts of the polymer composite emulsion onto a polypropylene base film using a roller coater, and drying in a 60°C oven for 1 min to obtain the battery separator.

**Table 1**

| Samples | CNFs Concentr ation (wt.%) | Oil-to-water ratio | Particle Size Distribution (nm) | Stability (Y/N) | Viscosity (Mpa*s) |
|---|---|---|---|---|---|
| Pickering Emulsion 1 | 0.2 | 1:4 | 500 | Y | 92.6 |
| Pickering Emulsion 2 | 0.5 | 1:4 | 900 | Y | 364.1 |
| Pickering Emulsion 3 | 0.2 | 1:8 | 100/1200 | N | 71.5 |

Characteristic parameters of the battery separators prepared according to Embodiment 2, Comparative Example 1, Comparative Example 2 and Comparative Example 3 are shown in Table 2. As can be seen from Table 2, the battery separator prepared according to Embodiment 2 has the smallest heat shrinkage rate and the largest positive electrode adhesive strength.

**Table 2**

| Serial number | Increase in air permeability (s/100cc) | Internal Resistance (Ω.cm²) | Heat shrinkage rate (130°C/1h) | | Positive electrode adhesion strength | Positive electrode adhesion strength | Positive electrode adhesion strength |
|---|---|---|---|---|---|---|---|
| | | | MD (%) | TD (%) | | | |
| | | | | | (25°C, 3Mpa, 60s) | (50°C, 3Mpa, 60s) | (90°C, 3Mpa, 60s) |
| | | | | | (N/m) | (N/m) | (N/m) |
| Embodiment 2 | 54 | 1.42 | 2.3 | 2.0 | 4.6 | 5.9 | 7.4 |
| Comparative Example 1 | 162 | 2.83 | 7.8 | 6.9 | 3.1 | 3.6 | 5.1 |
| Comparative Example 2 | 154 | 2.66 | 7.9 | 6.6 | 2.7 | 3.5 | 5.3 |
| Comparative Example 3 | 43 | 1.25 | 78.2 | 81.4 | 4.2 | 5.3 | 7.0 |

In this disclosure, the method includes the following steps: preparing the vegetable-oil-based acrylate monomer by synthesis using the vegetable oil as a raw material, adding a certain proportion of the methyl methacrylate monomer, the vinylidene fluoride monomer, the acrylonitrile monomer, the acrylamide monomer and the styrene monomer, and dispersing and polymerizing using the cellulose nanofibers as a stabilizer, a mixture of ethanol and water as a dispersing agent and azobisisobutyronitrile as an initiator. The preparation method is more environmentally friendly than an existing preparation method. Subsequently, the prepared polymer particles having a multilayer structure are blended with barium titanate. A blended slurry is coated onto the base film and then placed in an oven for drying. During a drying process, a density difference exists between barium titanate and the polymer particles, so that barium titanate having a relatively large density sinks, and the polymer particles float up. Therefore, the prepared battery separator has excellent heat resistance and high adhesive performance. Furthermore, only one coating process is required in the preparation process. Compared with an existing commonly used secondary coating manner, both energy consumption and costs can be greatly reduced. In addition, the battery separator provided in the present disclosure is adaptable to hot-pressing processes of different battery manufacturers, and maintains adhesion to the electrode sheets within a hot-pressing temperature range of 25°C to 150°C.

The foregoing descriptions are merely some specific embodiments of the present disclosure, but are not intended to limit the present disclosure. Any modification, equivalent replacement, or improvement made within the spirit and principle of the present disclosure shall fall within the scope of protection of the present disclosure. The technical scope of the present disclosure is not limited to the content described in the specification, but must be determined based on the scope of the claims.

## Claims

1. A battery separator, comprising:
at least one base film;
at least one inorganic layer located on the base film; and
a plurality of polymer particles, wherein the plurality of polymer particles are located on the inorganic layer, and the density of the polymer particles is less than the density of the inorganic layer.

2. The battery separator according to claim 1, wherein the inorganic layer comprises one or more of barium titanate, alumina, silica, and titanium dioxide.

3. The battery separator according to claim 2, wherein the polymer particles comprise one or more of a polyacrylonitrile layer, a polystyrene layer, a polyvinylidene fluoride layer, a polymethyl methacrylate layer, and a polyacrylamide layer.

4. The battery separator according to claim 3, wherein a vegetable oil layer is provided on an outer side of the polymer particles.

5. The battery separator according to claim 4, wherein the vegetable oil layer comprises one or more of sunflower seed oil, Chinese tallow seed oil, olive oil, rubber seed oil, castor oil, tung oil, and palm oil.

6. The battery separator according to claim 4, wherein the polymer particles further comprise a plurality of cellulose nanofibers, the plurality of cellulose nanofibers are located on an outer side of the vegetable oil layer, and a portion of the plurality of cellulose nanofibers are connected to the inorganic layer.

7. The battery separator according to claim 6, wherein the cellulose nanofibers comprise one or more of degreased cotton, paper pulp, wood pulp, and hemp.

8. A preparation method of a battery separator, comprising:
mixing vegetable oil, N-methylethanolamine and a catalyst, heating and sealing to obtain a vegetable-oil-based precursor;
mixing the vegetable-oil-based precursor and an anhydride, sealing and heating to obtain a vegetable-oil-based acrylate monomer;
mixing the vegetable-oil-based acrylate monomer, perbenzoic acid and sodium carbonate, sealing and stirring at room temperature to obtain a vegetable-oil-based acrylate epoxy monomer;
uniformly mixing the vegetable-oil-based acrylate epoxy monomer, a styrene monomer, a methyl methacrylate monomer, a vinylidene fluoride monomer and an acrylonitrile monomer, subsequently adding dropwise into a cellulose nanofiber suspension, mixing and stirring to obtain an oil-water mixture, and treating the oil-water mixture by an ultrasonic disruptor to obtain a Pickering emulsion;
adding the Pickering emulsion dropwise into a mixed solvent of ethanol and water, adding a water-soluble initiator, after a reaction is finished, cooling to room temperature, and filtering with a filter screen to obtain a polymer composite emulsion;
mixing the polymer composite emulsion with an inorganic substance to obtain a coating slurry; and
coating the coating slurry onto the base film, and drying to obtain the battery separator.

9. The preparation method of a battery separator according to claim 8, wherein the cellulose nanofiber suspension comprises one or more of degreased cotton, paper pulp, wood pulp, and hemp.

10. The preparation method of a battery separator according to claim 8, wherein the inorganic substance comprises one or more of barium titanate, alumina, silica, and titanium dioxide.

11. The preparation method of a battery separator according to claim 8, wherein a mixture of vegetable oil, the N-methylethanolamine and the catalyst has a heating temperature of 50°C to 80°C and a reaction time of 8 h; a mixture of the vegetable-oil-based precursor and the anhydride has a heating temperature of 60°C to 80°C and a reaction time of 8 h to 12 h; and a mixture of the vegetable-oil-based acrylate monomer, perbenzoic acid and sodium carbonate has stirring time of 12 h.

12. The preparation method of a battery separator according to claim 8, wherein the ultrasonic disruptor has a processing power of 600 watts to 800 watts, and a processing time of 10 min to 15 min; and after dropwise adding the Pickering emulsion to a mixed solvent and subsequently the water-soluble initiator, polymerization is carried out at 60°C to 80°C for 2h to 4 h.

13. The preparation method of a battery separator according to claim 8, wherein the oil-water mixture has an oil-to-water ratio of 1:4-1:8.

14. The preparation method of a battery separator according to claim 8, wherein the water-soluble initiator comprises one or more of ammonium persulfate, potassium persulfate, and peroxide.

15. The preparation method of a battery separator according to claim 12, wherein the coating slurry is coated onto the base film and then dried at 60°C to 90°C for 0.5 min to 3 min.
